# EUROPÄISCHE PATENTSCHRIFT

(11) **EP 4 097 534 B1**
(45) Veröffentlichungstag und Bekanntmachung des Hinweises auf die Patenterteilung: **09.12.2026**
(21) Anmeldenummer: 21700402.7
(22) Anmeldetag: 11.01.2021
(51) Int. Cl.: G02B 27/09, G01S 17/08, G02B 19/00

(54) **SENDEEINHEIT UND LIDAR-VORRICHTUNG MIT VERBESSERTER OPTISCHER EFFIZIENZ**
TRANSMISSION UNIT AND LIDAR DEVICE HAVING IMPROVED OPTICAL EFFICIENCY
UNITÉ DE TRANSMISSION ET DISPOSITIF LIDAR AYANT UNE EFFICACITÉ OPTIQUE AMÉLIORÉE

(30) Priorität: 30.01.2020 DE 102020201118
(43) Veröffentlichungstag der Anmeldung: 07.12.2022
(73) Patentinhaber: Robert Bosch GmbH, 70442 Stuttgart (DE)
(72) Erfinder: AMBERGER, Maximilian, 76189 Karlsruhe (DE); HIPPLER, Markus, 70182 Stuttgart (DE); ALBUQUERQUE, Andre, 3550-165 Penalva do Castelo (PT); PEREIRA, Dionisio, 4430 818 Avintes (PT); SPIESSBERGER, Stefan, 71384 Weinstadt (DE); SCHUMANN, Anne, 70825 Korntal-Muenchingen (DE); GROENING, Albert, 70195 Stuttgart (DE)
(86) Internationale Anmeldenummer: PCT/EP2021/050333
(87) Internationale Veröffentlichungsnummer: WO 2021/151638

(56) Entgegenhaltungen:
- EP-A1- 2 884 302
- DE-A1- 102017 124 535
- US-A1- 2019 235 081

## Beschreibung

Die Erfindung betrifft eine Sendeeinheit, insbesondere für eine LIDAR-Vorrichtung, zum Emittieren von kollimierten Strahlen in einen Abtastbereich, aufweisend mindestens eine Strahlenquelle zum Erzeugen von Strahlen in Form eines Strahlenbündels, wobei die Strahlenquelle als ein Emitter-Array ausgestaltet ist, und aufweisend eine Sendeoptik mit mindestens einer Linse. Des Weiteren betrifft die Erfindung eine LIDAR-Vorrichtung mit einer Sendeeinheit.

### Stand der Technik

Die Strahlausbreitung eines Laserstrahls kann durch das Strahlparameterprodukt beschrieben werden. Das Strahlparameterprodukt ist abhängig von der Beugungsmaßzahl, die umgekehrt proportional zu der Strahlqualität ist.

Der Beugungsmaßzahl einer Strahlenquelle wird umso größer, je größer der Emissionsdurchmesser bzw. der Strahltaillendurchmesser wird, bei gleicher Divergenz der erzeugten Strahlen. Dieser Zusammenhang hat zur Folge, dass Strahlenquellen mit großen Emissionsdurchmessern, wie beispielsweise Oberflächenemitter, nicht mit einer geringen Divergenz bei einem kompakten Bauraum kollimiert werden können. Es sind somit größere Linsen nötig, um Strahlen von einer Strahlenquelle mit einer größeren Beugungsmaßzahl zu kollimieren und somit eine geringe Divergenz der Strahlen zu erzielen.

Üblicherweise werden strahlformende optische Systeme, wie beispielsweise Sendeeinheiten von LIDAR-Vorrichtungen, derart konzipiert, dass sie eine höchstmögliche optische Effizienz aufweisen. Hierfür muss der Durchmesser der Optik ausreichend groß dimensioniert sein, um alle Strahlen der Strahlenquelle zu fokussieren.

Die durch Oberflächenemitter realisierbare Strahlungsleistung ist proportional zu der Emissionsfläche des Oberflächenemitters. Aus diesem Grund entsteht oftmals ein Kompromiss zwischen der Strahlungsleistung und dem verfügbaren Bauraum.

Bei den üblichen Anwendungsgebieten von LIDAR-Vorrichtungen ist der verfügbare Bauraum begrenzt und erschwert somit den Einsatz von leistungsfähigen Oberflächenemittern.

Das Dokument US 2019/235081 A1 offenbart ein scannendes LIDAR-System, bei dem ein Sender Lichtpulse aussendet, die von einem Ziel reflektiert und von einem Empfänger mit einem Pixel-Array detektiert werden, wobei die Auflösung des Systems durch eine inkrementelle zeitliche Verschiebung der Pulse in aufeinanderfolgenden Scans höher ist als die Pixelauflösung des Empfängers.

Das Dokument DE 10 2017 124535 A1 offenbart ein Sende-Empfangsmodul für einen optoelektronischen Sensor, bei dem ein Lichtsender und ein Lichtempfänger koaxial angeordnet sind und eine gemeinsame Optik nutzen.

Das Dokument EP 2 884 302 A1 offenbart einen reflektiven photoelektrischen Sensor, der einen Lichtstrahl mit ovalem Querschnitt erzeugt, indem eine Laserdiode, eine Blende mit unterschiedlichen Längen in Längs- und Querachse und eine Linse zur Kollimation des durch die Blende tretenden Lichts kombiniert werden.

### Offenbarung der Erfindung

Die der Erfindung zugrunde liegende Aufgabe kann darin gesehen werden, eine Sendeeinheit und eine LIDAR-Vorrichtung vorzuschlagen, die den Einsatz von leistungsfähigen Oberflächenemittern bei geringem Bauraumbedarf ermöglichen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine Sendeeinheit, insbesondere für eine LIDAR-Vorrichtung, zum Emittieren von kollimierten Strahlen in einen Abtastbereich bereitgestellt.

Die Sendeeinheit weist mindestens eine Strahlenquelle zum Erzeugen von Strahlen in Form eines Strahlenbündels auf. Die Strahlenquelle ist als ein Emitter-Array ausgestaltet. Des Weiteren weist die Sendeeinheit eine Sendeoptik mit mindestens einer Linse auf. Es ist eine Blende mit genau einer Apertur vorgesehen, welche dazu eingerichtet ist, einen Querschnitt des Strahlenbündels aus den erzeugten Strahlen in einer Horizontalrichtung und/oder einer Vertikalrichtung zu begrenzen. Die mindestens eine Linse der Sendeoptik ist in Emissionsrichtung der Strahlen der Blende nachgelagert angeordnet.

Beispielsweise kann ein Laserarray ein mehrteiliges Strahlenbündel erzeugen, welches im Fernfeld ein einteiliges Strahlenbündel ausbilden kann. Die erzeugten Strahlen des Strahlenbündels müssen hierbei nicht parallel zueinander verlaufen. Erst in kollimierter Form können die Strahlen des Strahlenbündels im Wesentlichen parallel zueinander ausgerichtet sein.

Die Horizontalrichtung und die Vertikalrichtung sind orthogonal zu einer Ausbreitungsrichtung der Strahlen gerichtet.

Durch den Einsatz der Blende kann ein Teil der erzeugten Strahlen der Strahlenquelle blockiert bzw. abgeschnitten werden. Vorzugsweise kann ein Randabschnitt der erzeugten Strahlen, mit einer geringen Strahlungsleistung blockiert werden, um einen reduzierten Emissionsdurchmesser bzw. Strahltaillendurchmesser bereitzustellen.

Es kann vorzugsweise der zentrierte Hauptanteil der durch die Strahlenquelle erzeugten Strahlungsleistung durch die Blende passieren. Die weniger leistungsfähigen Strahlen im Randabschnitt können durch die Blende blockiert werden.

Die Reduzierung des Emissionsdurchmessers führt zu einer kleineren Beugungsmaßzahl und zu einer höheren Strahlqualität. Durch die höhere Strahlqualität und durch den reduzierten Emissionsdurchmesser kann eine Sendeoptik mit geringen Abmessungen verwendet werden. Beispielsweise kann die mindestens eine Linse einen gegenüber dem initialen Emissionsdurchmesser der Strahlenquelle geringeren Durchmesser aufweisen.

Durch die seitliche Blockierung der Strahlen entsteht zudem eine homogenere Intensitätsverteilung. Die Pupille des menschlichen Auges hat beispielsweise einen Durchmesser von 7 mm. Für die Augensicherheit limitierend ist jeweils die höchste Energie welche auf eine Kreisfläche mit 7 mm Durchmesser fällt. Weist der ausgesendete Laserstrahl (nach passieren der Blende) einen deutlich größeren Durchmesser als 7 mm auf, dann sind starke Schwankungen in der Intensität nachteilig da in den Intensitätsmaxima höhere Energien ins Auge strahlen können.

Die mindestens eine Linse der Sendeoptik kann vorzugsweise zum Kollimieren der Strahlen eingesetzt werden, welche die Blende passieren.

Durch die Blende können vorzugsweise 70-95% der von der Strahlenquelle erzeugten Strahlen transmittieren bzw. passieren. Die Effizienz der Strahlenquelle kann durch den Einsatz der Blende geringfügig beeinträchtigt werden, um eine kompakt ausgestaltet Sendeeinheit zu realisieren.

Nach einem weiteren Aspekt der Erfindung wird eine LIDAR-Vorrichtung zum Abtasten eines Abtastbereichs mit Strahlen bereitgestellt. Die LIDAR-Vorrichtung weist eine erfindungsgemäße Sendeeinheit und eine Empfangseinheit zum Empfangen von aus dem Abtastbereich reflektierten und/oder rückgestreuten Strahlen auf.

Die mindestens eine Strahlenquelle kann beispielsweise eine linienförmige, runde oder rechteckige Ausleuchtung mit erzeugten Strahlen ermöglichen. Die mindestens eine Linse der Sendeoptik kann eine relativ große Brennweite von mehr als 30mm aufweisen, um die erzeugten und durch die Blende transmittierten Strahlen zu kollimieren. Durch diese Maßnahme werden die Strahlen mit einer geringen Divergenz in den Abtastbereich emittiert.

Durch die Blende können vorzugsweise erzeugte Strahlen blockiert werden, welche unter einem großen Emissionswinkel abstrahlen. Der große Emissionswinkel kann beispielsweise im Bereich eines maximalen Emissionswinkels liegen.

Durch die Blende kann der Emissionsdurchmesser oder zumindest eine horizontale und/oder vertikale Ausdehnung der emittierten Strahlen eingeschränkt werden, welche den Bauraumbedarf der LIDAR-Vorrichtung maßgeblich beeinflussen.
Die Form und Größe der Apertur kann hierbei beliebig eingestellt werden, um eine optimale Strahlformung und Divergenz zu erzielen.

Vorzugsweise kann die Form der Apertur an eine Emissionscharakteristik der Strahlenquelle angepasst sein.

Die Sendeeinheit ist nicht auf eine Strahlenquelle beschränkt. Beispielsweise können mehrere parallel oder seriell betriebene Strahlenquellen eingesetzt werden.

Die Strahlenquelle kann beispielsweise eine LED oder ein Laser sein. Die erzeugten Strahlen können in einem infraroten, ultravioletten oder sichtbaren Wellenlängenbereich durch die Strahlenquelle erzeugt werden.

Gemäß einem Ausführungsbeispiel weist die Linse der Sendeoptik eine Brennweite auf, welche dazu eingerichtet ist, die aus der Blende emittierten Strahlen zu kollimieren. Die Sendeoptik kann eine oder mehrere Linsen aufweisen, welche die erzeugten und durch die Blende transmittierten Strahlen zu Strahlen mit geringer Divergenz kollimieren können. Die Brennweite der Linse kann vorzugsweise auf die Anordnung der Strahlenquelle und die Größe der Apertur der Blende angepasst sein.

Die Blende kann dabei in die Sendeoptik integriert sein. Alternativ kann die Sendeoptik nach einem Umlenkspiegel bzw. einem Spiegelelement angeordnet sein, um die erzeugten Strahlen, welche die Blende passiert haben für das Emittieren in den Abtastbereich zu formen.

Die Sendeoptik kann darüber hinaus Filter und Entspiegelungen aufweisen, um Streulicht oder Störlicht zu minimieren.

Nach einer weiteren Ausführungsform weist die mindestens eine Linse der Sendeoptik eine Brennweite von mindestens 40 mm auf. Durch diese Maßnahme können auch unter einem großen Emissionswinkel von der Strahlenquelle erzeugten Strahlen kollimiert werden. Vorzugsweise kann die Linse bzw. die Ausführung der Sendeoptik auf die Strahlenquelle angepasst sein, um eine minimale Divergenz der in den Abtastbereich emittierten Strahlen zu erzielen.

Gemäß einem weiteren Ausführungsbeispiel weist die Apertur der Blende eine Ausdehnung in Horizontalrichtung und/oder Vertikalrichtung auf, durch welche ein Randabschnitt des Strahlenbündels aus den erzeugten Strahlen blockiert wird. Die erzeugten Strahlen und insbesondere der Strahlenbündel aus den erzeugten Strahlen wird im äußersten Randabschnitt des Emissionsdurchmessers durch die Blende absorbiert und somit an einem Passieren gehindert. Durch den Einsatz der Blende kann der energetisch geringe Anteil der erzeugten Strahlen der Strahlenquelle gefiltert werden, um den Emissionsdurchmesser der Strahlen für die nachfolgende Sendeoptik zu optimieren. Durch diese Maßnahme kann die Sendeoptik und insbesondere die mindestens eine Linse der Sendeoptik eine geringere Abmessung aufweisen.

Durch die Möglichkeit einer kompakter ausgeformten Sendeoptik kann die gesamte Sendeeinheit mit einem geringeren Bauraumbedarf hergestellt werden.

Nach einer weiteren Ausführungsform weist der durch die Blende blockierte Randabschnitt des Strahlenbündels aus den erzeugten Strahlen einen Anteil von mindestens 10% an der gesamten Strahlungsenergie der erzeugten Strahlen auf. Hierdurch kann eine deutliche Reduzierung des Emissionsdurchmessers der erzeugten Strahlen erzielt werden. Der Anteil der durch die Blende blockierten Strahlen an der gesamten Strahlungsenergie kann vorzugsweise 5-30% betragen. Durch diese Maßnahme werden die Strahlen gefiltert, welche im Randabschnitt geringfügig zu der gesamten Strahlungsenergie beitragen. Die von der Strahlungsquelle bereitgestellte Strahlungsleistung wird somit nur minimal vermindert. Durch den reduzierten Emissionsdurchmesser der Strahlen kann jedoch eine kompaktere Bauform der Sendeeinheit ermöglicht werden.

Alternativ oder zusätzlich können ein oder mehrere optische Elemente vorgesehen sein, um die von der Strahlenquelle erzeugten Strahlen initial zu formen.

Bei einer weiteren Ausführungsform ist zum Erhöhen eines Augensicherheitsgrenzwerts eine zumindest bereichsweise seitliche Blockierung der erzeugten Strahlen durch die Blende vorgesehen. Das seitliche Blockieren der Strahlen bezieht sich auf das Einschränken eines Querschnitts der Strahlen quer zur Ausbreitungsrichtung der Strahlen. Durch das seitliche Blockieren der Strahlen kann eine homogenere Intensitätsverteilung realisiert werden, welche zu einem höheren Augensicherheitsgrenzwert führt.

Gemäß einem weiteren Ausführungsbeispiel weisen die erzeugten Strahlen einen linienförmigen oder einen rechteckigen Querschnitt auf, wobei die erzeugten Strahlen in Vertikalrichtung eine größere Ausdehnung als in Horizontalrichtung aufweisen. Die Strahlenquelle kann somit mehrere Emissionsflächen aufweisen, welche die erzeugten Strahlen in beliebigen Formen emittieren können.

Nach einer weiteren Ausführungsform weist die Apertur der Blende einen runden, ovalen, rechteckigen, quadratischen oder linienförmigen Querschnitt auf. Hierdurch kann die Apertur der Blende eine beliebige Form aufweisen, um die erzeugten Strahlen optimal in ihrem Emissionsdurchmesser anzupassen. Vorzugsweise können alle erzeugten Strahlen, außer den Strahlen in einem Randabschnitt, die Apertur passieren.

Gemäß einem weiteren Ausführungsbeispiel weist die Sendeeinheit ein der Linse der Sendeoptik oder der Blende nachgelagertes rotierbares oder schwenkbares Spiegelelement auf. Alternativ ist die Sendeeinheit rotierbar oder schwenkbar ausgestaltet. Die Sendeeinheit kann somit ein der Blende nachgelagertes Spiegelelement aufweisen, welches die Strahlen nach dem Passieren der Blende oder nach einem Formen durch die Linse in unterschiedliche horizontale und/oder vertikale Ablenkwinkel ablenken kann. Das Spiegelelement kann beispielsweise eine vertikal und/oder horizontal scannende Bewegung vollführen, um einen Abtastbereich mit den emittierten Strahlen abzutasten.

Bei einer alternativen Ausgestaltung kann die gesamte Sendeeinheit auf einem rotierbaren oder schwenkbaren Drehteller angeordnet sein, um eine horizontale Ausdehnung eines Abtastbereichs mit emittierten Strahlen abzutasten. Die vertikale Ausdehnung des Abtastbereichs kann dabei durch ein zusätzliches Spiegelelement oder durch eine vertikal aufgefächerte Form der emittierten Strahlen erfolgen. Beispielsweise können die erzeugten Strahlen eine Linienform bilden, welche in Vertikalrichtung verläuft.

Die vertikale Auffächerung der erzeugten Strahlen kann dabei durch eine oder mehrere Strahlenquellen erfolgen, die linienförmige Strahlen emittieren. Alternativ oder zusätzlich können Mikrolinsen-Arrays, Makrolinsen-Arrays, Zylinderlinsen und dergleichen eingesetzt werden, um eine vertikale und/oder horizontale Auffächerung der erzeugten Strahlen umzusetzen.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer LIDAR-Vorrichtung gemäß einem Ausführungsbeispiel,
- Fig. 2: eine Draufsicht auf eine Sendeeinheit der LIDAR-Vorrichtung aus Fig. 1 und
- Fig. 3: eine Seitenansicht auf eine Sendeeinheit der LIDAR-Vorrichtung aus Fig. 1.

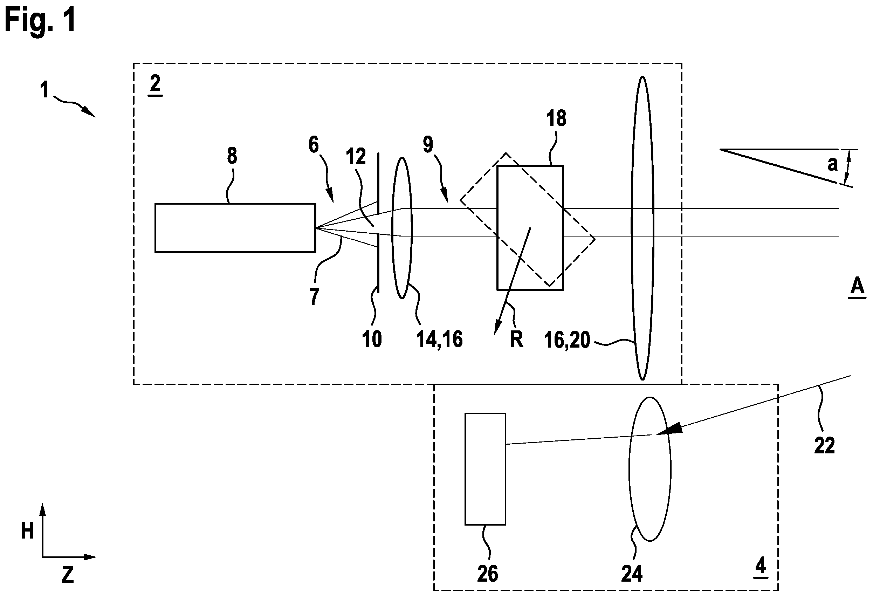

Die Figur 1 zeigt eine schematische Darstellung einer LIDAR-Vorrichtung 1 gemäß einem Ausführungsbeispiel. Die LIDAR-Vorrichtung 1 dient zum Abtasten eines Abtastbereichs A und weist eine Sendeeinheit 2 und eine Empfangseinheit 4 auf.

Die Sendeeinheit 2 ist dazu eingerichtet, elektromagnetische Strahlen 6 zu erzeugen und diese unter einem variierenden Abtastwinkel a in den Abtastbereich A zu emittieren.

Hierzu weist die Sendeeinheit 2 eine Strahlenquelle 8 zum Erzeugen von elektromagnetischen Strahlen 6 auf. Erfindungsgemäß ist die Strahlquelle als Emitter-Array ausgestaltet. Des Weiteren kann die Strahlenquelle 8 als ein Array aus einer Vielzahl von Lasern und/oder LEDs ausgestaltet sein.

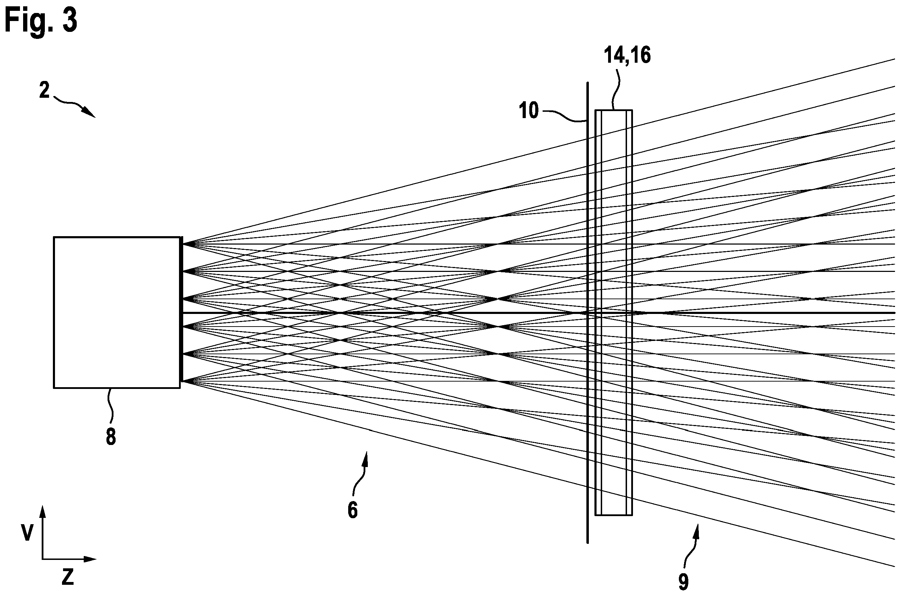

Die Strahlenquelle 8 weist eine in Vertikalrichtung V ausgedehnte Emissionsfläche auf, durch welche die erzeugten Strahlen 6 linienförmig erzeugt werden. Dies wird in der Figur 3 verdeutlicht. In Horizontalrichtung H weist die Emissionsfläche der Strahlenquelle 8 eine im Wesentlichen punktförmige Ausdehnung auf.

Die erzeugten Strahlen 6 können beispielsweise in einem für das menschliche Auge sichtbaren oder unsichtbaren Wellenlängenbereich, wie beispielsweise Infrarotbereich oder UV-Bereich, liegen. Die erzeugten Strahlen 6 werden in Form eines mehrteiligen Strahlenbündels durch die Strahlenquelle 8 erzeugt.

Das Strahlenbündel aus den erzeugten Strahlen 6 wird durch eine Blende 10 in seinem Querschnitt reduziert. Die Blende 10 weist eine Apertur 12 auf, durch welche die erzeugten Strahlen 6 die Blende 10 passieren können. Es werden Strahlen in einem Randabschnitt 7 des Strahlenbündels durch die Blende 10 blockiert.

Der Blende 10 nachgeschaltet ist eine Linse 14 einer Sendeoptik 16. Die Linse 14 ist eine konvexe Linse, welche beispielsweise zum Kollimieren der erzeugten Strahlen 6 einsetzbar ist. Die die Apertur 12 passierten Strahlen 9 weisen eine geringfügig niedrigere Strahlungsleistung auf, da die Randabschnitte 7 des Strahlenbündels durch die Blende 10 blockiert werden.

Die kollimierten oder zumindest durch die Linse 14 vorgeformten Strahlen können anschließend von einem Spiegelelement 18 entlang einer Rotationsachse R abgelenkt werden.

Das Spiegelelement 18 kann beispielhaft als ein Würfelprisma, ein Spiegel, ein MEMS-Spiegel und dergleichen ausgestaltet sein.

Die vom Spiegelelement 18 abgelenkten Strahlen können von einer weiteren Linse 20 der Sendeoptik 16 geformt und anschließend in den Abtastbereich A emittiert werden.

Die erzeugten Strahlen 6 können durch die erste Linse 14, durch die zweite Linse 20 oder durch eine Kombination der beiden Linsen 14, 20 der Sendeoptik 16 kollimiert werden.

Die im Abtastbereich A rückgestreuten oder reflektierten Strahlen 22 werden von der Empfangseinheit 4 empfangen und detektiert. Hierzu weist die Empfangseinheit 4 beispielhaft eine Empfangsoptik 24 und einen Detektor 26 auf.

Die vom Detektor 26 der Empfangseinheit 4 detektierten Strahlen 22 können anschließend ausgewertet werden.

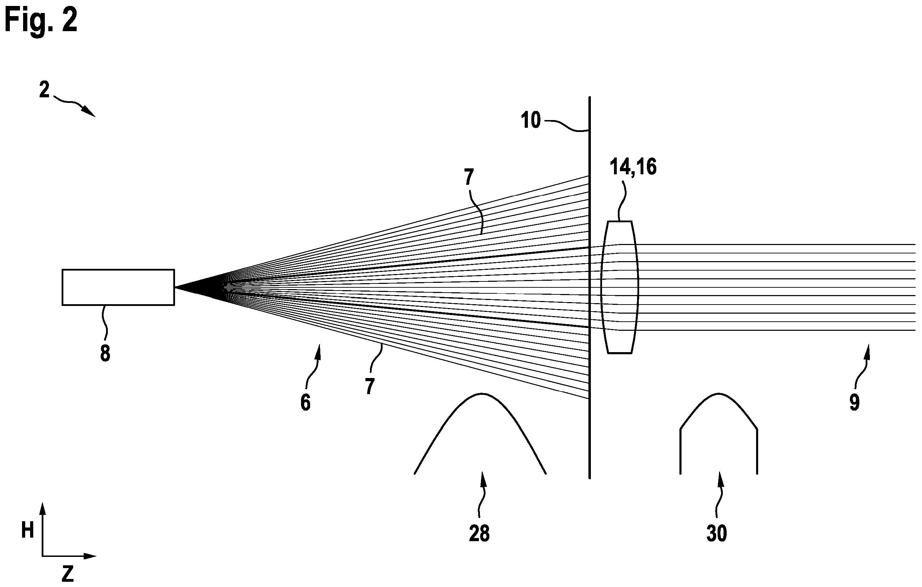

Die Figur 2 zeigt eine Draufsicht auf die Sendeeinheit 2 der LIDAR-Vorrichtung 1 aus Figur 1. Es wird insbesondere die Ausdehnung der erzeugten Strahlen 6 in Horizontalrichtung H veranschaulicht. Die Blende 10 begrenzt den Strahlenbündel aus den erzeugten Strahlen 6 in Horizontalrichtung H und blockiert Strahlen des Randabschnitts 7.

Zum Verdeutlichen des Effekts der Blende ist ein Strahlenprofil 28 vor der Blende 10 und ein Strahlenprofil 30 nach der Blende 10 dargestellt. Die Strahlenprofile 28, 30 beschreiben eine Strahlungsenergie entlang eines Querschnitts der erzeugten Strahlen 6 und der Strahlen 9 nach dem Passieren der Blende 10.

Im dargestellten Ausführungsbeispiel werden die Strahlen 6 ausschließlich entlang der Horizontalrichtung H durch die Blende 10 randseitig begrenzt. In Vertikalrichtung V erfolgt beispielhaft keine Blockierung der Strahlen 6 durch die Blende 6.

Die Blende 10 und die entsprechende Apertur 12 können derart ausgestaltet sein, dass die Strahlen 6 sowohl in Vertikalrichtung V als auch in Horizontalrichtung H randseitig blockiert werden.

Die Figur 3 zeigt eine Seitenansicht auf die Sendeeinheit 2 der LIDAR-Vorrichtung 1 aus Figur 1 und veranschaulicht die Ausbreitung der Strahlen 6 in Emissionsrichtung Z und entlang der Vertikalrichtung V. Dabei wird verdeutlicht, dass die erste Linse 14 der Sendeoptik 16 als eine Zylinderlinse geformt ist und die erzeugten Strahlen 6 in Vertikalrichtung V von der Blende unbeeinflusst passieren können.

Des Weiteren wird durch die Figur 3 illustriert, dass die Strahlenquelle 8 eine linienförmige Ausleuchtung ermöglicht und eine in Vertikalrichtung V ausgedehnte Emissionsfläche zum Emittieren von Strahlen 6 aufweist.

## Patentansprüche

1. Sendeeinheit (2), insbesondere für eine LIDAR-Vorrichtung (1), zum Emittieren von kollimierten Strahlen in einen Abtastbereich (A), aufweisend mindestens eine Strahlenquelle (8) zum Erzeugen von Strahlen (6) in Form eines Strahlenbündels, wobei die Strahlenquelle (8) als ein Emitter-Array ausgestaltet ist, und aufweisend eine Sendeoptik (16) mit mindestens einer Linse (14, 20), **dadurch gekennzeichnet, dass** die Sendeeinheit (2) eine Blende (10) mit genau einer Apertur (12) aufweist, welche dazu eingerichtet ist, einen Querschnitt des Strahlenbündels aus den erzeugten Strahlen (6) in einer Horizontalrichtung (H) und/oder einer Vertikalrichtung (V) zu begrenzen, wobei die mindestens eine Linse (14, 20) der Sendeoptik (16) in Emissionsrichtung (Z) der Strahlen (6) der Blende (10) nachgelagert angeordnet ist.

2. Sendeeinheit nach Anspruch 1, wobei die Linse (14, 20) der Sendeoptik (16) eine Brennweite aufweist, welche dazu eingerichtet ist, die aus der Blende (10) austretenden Strahlen (9) zu kollimieren.

3. Sendeeinheit nach Anspruch 2, wobei die mindestens eine Linse (14, 20) der Sendeoptik (16) eine Brennweite von mindestens 40 mm aufweist.

4. Sendeeinheit nach einem der Ansprüche 1 bis 3, wobei die Apertur (12) der Blende (10) eine Ausdehnung in Horizontalrichtung (H) und/oder Vertikalrichtung (V) aufweist, durch welche ein Randabschnitt (7) des Strahlenbündels aus den erzeugten Strahlen (6) blockiert wird.

5. Sendeeinheit nach Anspruch 4, wobei der durch die Blende (10) blockierte Randabschnitt (7) des Strahlenbündels aus den erzeugten Strahlen (6) einen Anteil von mindestens 10% an der gesamten Strahlungsenergie der erzeugten Strahlen (6) aufweist.

6. Sendeeinheit nach einem der Ansprüche 1 bis 4, wobei zum Erhöhen eines Augensicherheitsgrenzwerts eine zumindest bereichsweise seitliche Blockierung der erzeugten Strahlen (6) durch die Blende (10) vorgesehen ist.

7. Sendeeinheit nach einem der Ansprüche 1 bis 5, wobei die erzeugten Strahlen (6) einen linienförmigen oder einen rechteckigen Querschnitt aufweisen, wobei die erzeugten Strahlen (6) in Vertikalrichtung (V) eine größere Ausdehnung als in Horizontalrichtung (H) aufweisen.

8. Sendeeinheit nach einem der Ansprüche 1 bis 6, wobei die Apertur (12) der Blende (10) einen runden, ovalen, rechteckigen, quadratischen oder linienförmigen Querschnitt aufweist.

9. Sendeeinheit nach einem der Ansprüche 1 bis 7, wobei die Sendeeinheit (2) ein der Linse (14, 20) der Sendeoptik (16) oder der Blende (10) nachgelagertes rotierbares oder schwenkbares Spiegelelement (18) aufweist oder die Sendeeinheit (2) rotierbar oder schwenkbar ausgestaltet ist.

10. LIDAR-Vorrichtung (1) zum Abtasten eines Abtastbereichs (A) mit Strahlen (6), aufweisend eine Sendeeinheit (2) gemäß einem der vorhergehenden Ansprüche und aufweisend eine Empfangseinheit (4) zum Empfangen von aus dem Abtastbereich (A) reflektierten und/oder rückgestreuten Strahlen (22).

## Claims

1. Transmission unit (2), in particular for a LIDAR device (1), for emitting collimated beams into a scanning region (A), comprising at least one beam source (8) for generating beams (6) in the form of a beam bundle, wherein the beam source (8) is configured as an emitter array, and comprising a transmission optical unit (16) having at least one lens (14, 20), **characterized in that** the transmission unit (2) comprises a stop (10) having exactly one aperture (12), which is designed to delimit a cross section of the beam bundle composed of the generated beams (6) in a horizontal direction (H) and/or a vertical direction (V), wherein the at least one lens (14, 20) of the transmission optical unit (16) is arranged downstream of the stop (10) in the emission direction (Z) of the beams (6).

2. Transmission unit according to Claim 1, wherein the lens (14, 20) of the transmission optical unit (16) has a focal length designed to collimate the beams (9) emerging from the stop (10).

3. Transmission unit according to Claim 2, wherein the at least one lens (14, 20) of the transmission optical unit (16) has a focal length of at least 40 mm.

4. Transmission unit according to any of Claims 1 to 3, wherein the aperture (12) of the stop (10) has an extent in the horizontal direction (H) and/or vertical direction (V) which results in the blocking of a marginal portion (7) of the beam bundle composed of the generated beams (6).

5. Transmission unit according to Claim 4, wherein the marginal portion (7) of the beam bundle composed of the generated beams (6) which is blocked by the stop (10) has a proportion of at least 10% of the total radiation energy of the generated beams (6).

6. Transmission unit according to any of Claims 1 to 4, wherein, for increasing an eye safety limit value, at least regional lateral blocking of the generated beams (6) by the stop (10) is provided.

7. Transmission unit according to any of Claims 1 to 5, wherein the generated beams (6) have a linear or a rectangular cross section, wherein the generated beams (6) have a greater extent in the vertical direction (V) than in the horizontal direction (H).

8. Transmission unit according to any of Claims 1 to 6, wherein the aperture (12) of the stop (10) has a round, oval, rectangular, square or linear cross section.

9. Transmission unit according to any of Claims 1 to 7, wherein the transmission unit (2) comprises a rotatable or pivotable mirror element (18) disposed downstream of the lens (14, 20) of the transmission optical unit (16) or the stop (10), or the transmission unit (2) is configured to be rotatable or pivotable.

10. LIDAR device (1) for scanning a scanning region (A) with beams (6), comprising a transmission unit (2) according to any of the preceding claims and comprising a reception unit (4) for receiving beams (22) reflected and/or backscattered from the scanning region (A).

## Revendications

1. Unité d'émission (2), en particulier destinée à un dispositif LIDAR (1), pour émettre des rayons collimatés dans une zone de balayage (A), comportant au moins une source de rayons (8) destinée à générer des rayons (6) sous forme d'un faisceau de rayons, dans laquelle la source de rayons (8) est conçue sous la forme d'un réseau d'émetteurs, et comportant une optique d'émission (16) comprenant au moins une lentille (14, 20), **caractérisée en ce que** l'unité d'émission (2) comporte un diaphragme (10) comprenant exactement une ouverture (12), qui est conçue pour limiter une section transversale du faisceau de rayons constitué des rayons (6) générés dans une direction horizontale (H) et/ou dans une direction verticale (V), dans laquelle ladite au moins une lentille (14, 20) de l'optique d'émission (16) est disposée en aval du diaphragme (10) dans la direction d'émission (Z) des rayons (6).

2. Unité d'émission selon la revendication 1, dans laquelle la lentille (14, 20) de l'optique d'émission (16) présente une distance focale qui est conçue pour collimater les rayons (9) émergeant du diaphragme (10).

3. Unité d'émission selon la revendication 2, dans laquelle ladite au moins une lentille (14, 20) de l'optique d'émission (16) présente une distance focale d'au moins 40 mm.

4. Unité d'émission selon l'une quelconque des revendications 1 à 3, dans laquelle l'ouverture (12) du diaphragme (10) présente une extension dans la direction horizontale (H) et/ou dans la direction verticale (V), par laquelle une partie de bord (7) du faisceau de rayons constitué des rayons (6) générés est occultée.

5. Unité d'émission selon la revendication 4, dans laquelle la partie de bord (7) du faisceau de rayons constitué des rayons (6) générés occultée par le diaphragme (10) présente une proportion d'au moins 10 % de l'énergie de rayonnement totale des rayons (6) générés.

6. Unité d'émission selon l'une quelconque des revendications 1 à 4, dans laquelle, pour augmenter une limite de sécurité oculaire, il est prévu une occultation latérale par le diaphragme (10), au moins par zones, des rayons (6) générés.

7. Unité d'émission selon l'une quelconque des revendications 1 à 5, dans laquelle les rayons (6) générés présentent une section transversale linéaire ou rectangulaire, dans laquelle les rayons (6) générés présentent dans la direction verticale (V) une plus grande extension que dans la direction horizontale (H).

8. Unité d'émission selon l'une quelconque des revendications 1 à 6, dans laquelle l'ouverture (12) du diaphragme (10) présente une section transversale ronde, ovale, rectangulaire, carrée ou linéaire.

9. Unité d'émission selon l'une quelconque des revendications 1 à 7, dans laquelle l'unité d'émission (2) présente un élément miroir (18) rotatif ou pivotant disposé en aval de la lentille (14, 20) de l'optique d'émission (16) ou du diaphragme (10), ou dans laquelle l'unité d'émission (2) est conçue de manière rotative ou pivotante.

10. Dispositif LIDAR (1) destiné à balayer une zone de balayage (A) avec des rayons (6), comportant une unité d'émission (2) selon l'une quelconque des revendications précédentes et comportant une unité de réception (4) destinée à recevoir des rayons réfléchis et/ou rétrodiffusés (22) en provenance de la zone de balayage (A).
